# FASCICULE DE BREVET EUROPEEN

(11) **EP 2 507 121 B1**
(45) Date de publication et mention de la délivrance du brevet: **25.12.2013**
(21) Numéro de dépôt: 10805615.1
(22) Date de dépôt: 29.11.2010
(51) Int. Cl.: B62K 21/18, B62K 21/00, B62K 25/08, B62K 21/04

(54) **Système de bridage pour une fourche à suspension de véhicule**
FLANSCHBASIERTES BEFESTIGUNGSSYSTEM FÜR DIE FEDERGABEL EINES FAHRZEUGES
FLANGE-BASED SECURING SYSTEM FOR A VEHICLE SUSPENSION FORK

(30) Priorité: 03.12.2009 FR 0958626
(43) Date de publication de la demande: 10.10.2012
(73) Titulaire: Eurl Stephane Wagner Mecanique, 88150 Thaon Les Vosges (FR)
(72) Inventeur: WAGNER, Stéphane, F-88390 Uxegney (FR)
(74) Mandataire: Brungard, Yves Francois
(86) Numéro de dépôt international: PCT/FR2010/052558
(87) Numéro de publication internationale: WO 2011/067526

(56) Documents cités:
- EP-A1- 1 992 555
- EP-A2- 0 245 221
- BE-A- 512 578
- FR-A1- 2 859 167
- FR-A1- 2 901 227
- US-A- 4 565 384
- US-A1- 2002 153 692
- US-A1- 2005 127 636

## Description

### DOMAINE DE L'INVENTION

L'invention concerne les véhicules à deux ou trois roues, dotés de fourche à suspension, et plus particulièrement un système de bridage d'une fourche avant à suspension comportant un té de fourche et un support supérieur. Elle s'applique en particulier mais non exclusivement à une motocyclette, un cyclomoteur, un scooter ou un vélo de montagne.

### TECHNIQUE ANTÉRIEURE

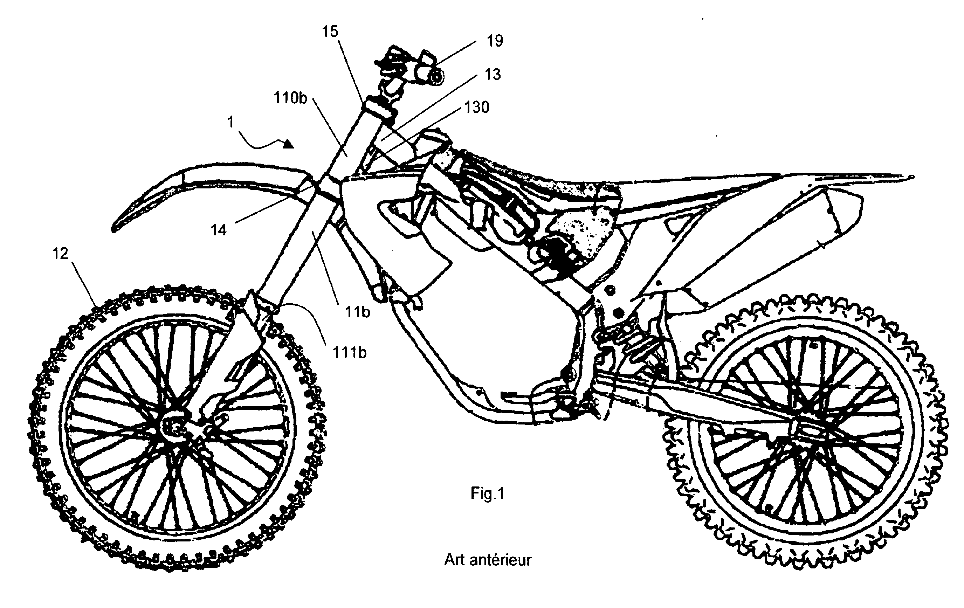

Une fourche avant à suspension 1 pour les véhicules à une roue avant comporte classiquement, comme représenté sur la figure 1, deux amortisseurs 11a, 11b montés parallèlement l'un à l'autre et à l'extrémité desquels une roue 12 avant est montée rotative. Un système de bridage relie les amortisseurs à l'autre extrémité de manière à monter l'ensemble pivotant par rapport au cadre 13 du véhicule.

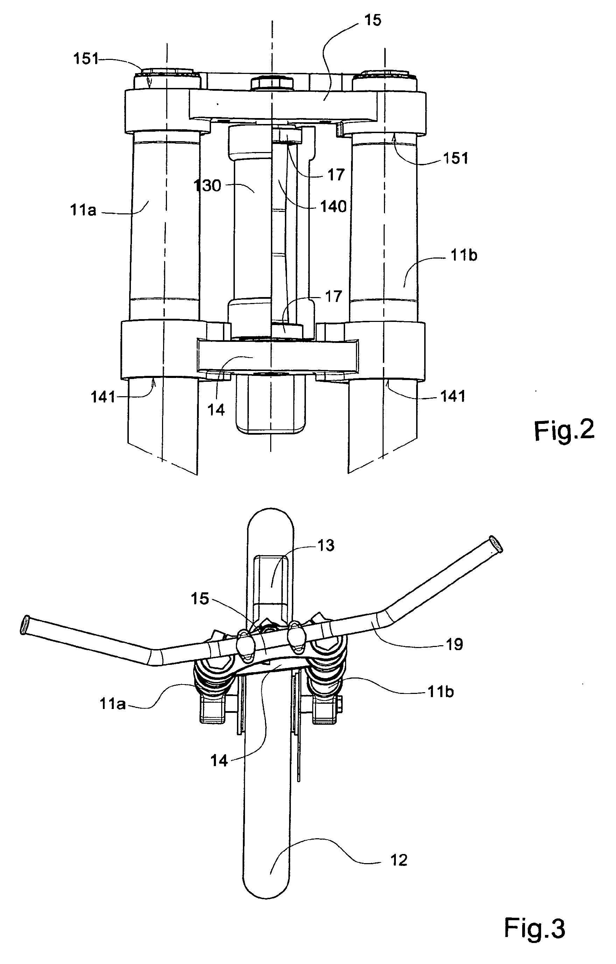

En se référant aux figures 1 et 2, le système de bridage de la fourche comporte un té de fourche 14 et une platine supérieure 15. Le té de fourche 14 comporte un arbre de fourche 140 destiné à être monté pivotant sur le cadre 13 du véhicule. Pour cela, le cadre 13 comporte un tube de colonne 130 de direction qui est traversé par l'arbre de fourche 140 par l'intermédiaire de deux moyens de guidage 17 tels que des roulements à billes ou à rouleau. La platine supérieure 15 est emmanchée à l'extrémité de l'arbre de fourche 140 de manière pivotante et y est maintenue par serrage. Un guidon 19 est fixé sur la platine supérieure 15 afin de permettre au pilote d'orienter la fourche et de diriger ainsi le véhicule.

Les amortisseurs 11a, 11b passent dans des logements inférieurs 141 et des logements supérieurs 151 prévus respectivement dans le té 14 et dans la platine supérieure 15. La fixation est assurée par un serrage des logements 141, 151, par exemple par des vis traversant une fente prévue dans le sens longitudinal des logements 141, 151. Les amortisseurs 11a, 11b sont télescopiques et comportent un fourreau 110a, 110b dans lequel un coulisseau, 111a, 111b est monté coulissant. On trouve un montage dit conventionnel dans lequel les coulisseaux 111a, 111b sont montés sur le système de bridage et les fourreaux 110a, 110b sont fixés sur un arbre de rotation de la roue 12. On trouve également un montage dit de fourche inversée, dans lequel les fourreaux 110a, 110b sont montés sur le système de bridage et les coulisseaux 111a, 111b sont fixés sur l'arbre de rotation de la roue, comme représenté sur la figure 1.

On constate un problème récurrent sur les fourches à suspension 1 de ce type. Ce problème est celui du vrillage permanent de la fourche. En effet, il existe de nombreuses situations dans lesquelles un effort de torsion extrême est appliqué entre la roue 12 et le guidon 19. A titre d'exemple, on trouve de telles situations lorsque la roue est dans une ornière et que le pilote tente de redresser la direction, lorsque le pilote a chuté et que la roue 12 vient en appui sur le sol parallèlement à celui-ci en même temps qu'une extrémité du guidon 19 s'accroche au sol, ou lors de la réception d'un saut en position de virage. Des cas ont aussi été observés dans certaines situations de freinage avec des véhicules comportant un seul disque de frein.

Lorsque la fourche est sollicitée en torsion de manière extrême, il se produit un glissement en pivotement des amortisseurs 11a, 11b dans les logements 141, 151 et de la platine supérieure 15 sur l'arbre de fourche 140. Les amortisseurs 11a, 11b sont alors désalignés et le plan de la roue 12 n'est plus perpendiculaire au guidon 19, comme le montre la figure 3. Le pilote se trouve alors dans une position non symétrique qui devient problématique pour la conduite du véhicule. On ne compte plus le nombre d'abandons en compétition de moto dus à l'impossibilité pour le compétiteur de maintenir une conduite efficace après la survenue d'un tel incident. Pour remédier à cette situation, il est en effet nécessaire de desserrer tous les bridages des logements 141, 151 et de la platine supérieure 15 sur l'arbre de fourche 140 pour remettre les pièces en position et resserrer le tout. Dans des cas extrêmes, on constate que le té de fourche 14 est tordu et qu'il doit être remplacé.

Le phénomène de glissement dans les logements 141, 151, en particulier les logements inférieurs 141, est particulièrement sensible avec les fourches inversées. En effet, le serrage des logements inférieurs 141 se fait sur le fourreau 110a, 110b, ce qui a tendance à diminuer le diamètre interne du fourreau. Or, le fourreau sert de guidage au coulisseau 111a, 111b avec un ajustement étroit, et un serrage excessif du fourreau pourrait bloquer le coulissement du coulisseau. Pour augmenter le couple d'adhérence entre le fourreau 110a, 110b et le logement inférieur 141, certains constructeurs ont augmenté la hauteur du logement inférieur 141. Cependant, cette modification ne s'avère pas suffisante et conduit à des pièces encombrantes.

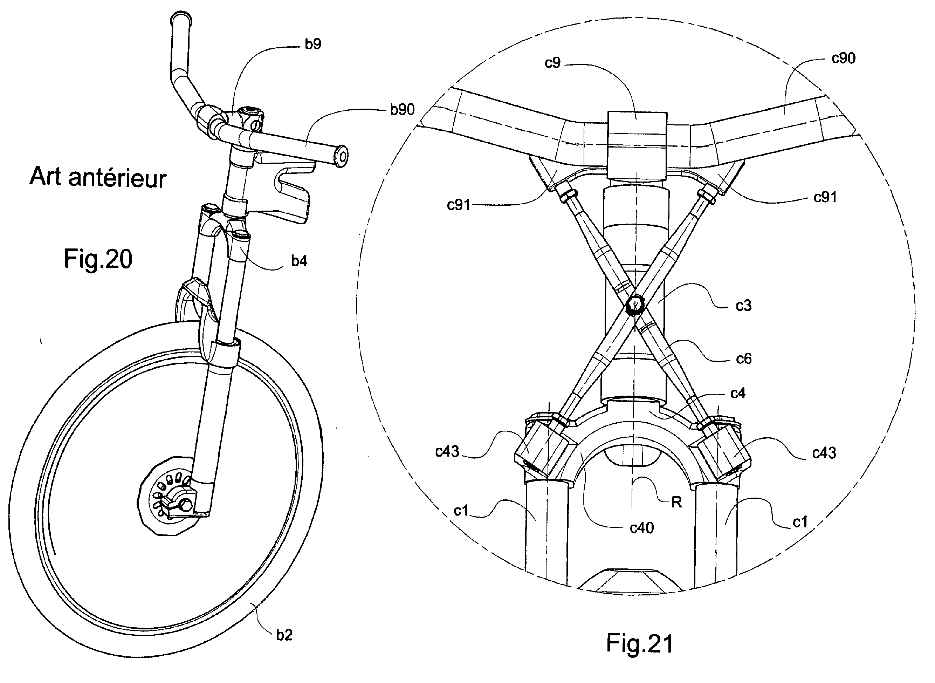

Certains vélos, en particulier les vélos dédiés à la descente de montagne, sont équipés du même type de fourche. D'autres fourches, comme représenté sur la figure 20, n'ont pas de platine supérieure mais uniquement un té de fourche b4 et une potence b9 sur laquelle est fixé le guidon b90. En cas de forte sollicitation en torsion, on constate soit le glissement de la potence b9 dans l'arbre de fourche, soit la torsion de l'arbre de fourche lui-même. Il s'en suit également un défaut d'orientation du guidon b90 par rapport à la roue b2.

Le document BE 512 578 montre un système de fourche dans lequel les tubes sont soudés aux platines. Même si ce système est rigide, il ne permet pas le démontage et l'interchangeabilité des amortisseurs.

### OBJECTIFS DE L'INVENTION

L'invention vise à fournir une fourche à suspension et son système de bridage qui soit moins exposé au risque de vrillage permanent.

### EXPOSÉ DE L'INVENTION

Avec ces objectifs en vue, l'invention a pour objet un système de bridage pour une fourche à suspension de véhicule, le système comportant un té de fourche et un support supérieur, le té de fourche comportant une platine inférieure et un arbre de fourche destiné à être monté pivotant sur le cadre du véhicule, la platine inférieure comportant deux logements inférieurs pour recevoir deux amortisseurs parallèlement l'un à l'autre et à l'avant de l'arbre de fourche, le système de bridage comportant des moyens d'assemblage pour assembler le support supérieur sur l'arbre de fourche. Le système comporte en outre des moyens raidisseurs extérieurs à l'arbre de fourche pour maintenir l'orientation relative du té de fourche et du support supérieur.

En complétant le système de bridage avec des moyens raidisseurs extérieurs à l'arbre aptes à empêcher le glissement en pivotement du support supérieur dans l'arbre de fourche, on empêche la survenue du désalignement du guidon et de la roue. L'utilisation du véhicule n'est donc plus perturbée par cet incident, que cette utilisation soit à titre de compétition, de loisir ou de transport.

L'invention concerne le cas où le support supérieur est une platine supérieure comportant deux logements supérieurs, chaque logement supérieur étant aligné avec l'un des logements inférieurs et recevant l'un des amortisseurs. Les logements de la platine supérieure et du té de fourche restent alignés, et donc les amortisseurs restent parallèles entre eux. La fourche ne se déforme plus de manière permanente et les problèmes de l'art antérieur sont surmontés sans qu'il soit nécessaire d'augmenter la hauteur du logement inférieur.

L'invention concerne également le cas où le support supérieur est une potence destinée à supporter un guidon. En prévoyant des moyens raidisseurs extérieurs à l'arbre de fourche, on soulage celui-ci et on apporte une grande rigidité de liaison entre la fourche et le guidon. On évite ainsi en particulier le pivotement de la potence sur l'arbre de fourche.

Selon une première disposition, les moyens raidisseurs comportent des moyens de contreventement reliant le support supérieur et la platine inférieure. Même si le support supérieur est emmanché de manière pivotante sur l'arbre de fourche, et a tendance à pivoter, ce pivotement est contrecarré par les moyens de contreventement entre le support supérieur et la platine inférieure.

Selon un mode de réalisation, le système de contreventement comporte au moins un tirant reliant le support supérieur et la platine inférieure dans une direction oblique par rapport à l'axe de l'arbre de fourche et décalé par rapport audit axe. Le pivotement de la platine supérieure aurait tendance à tirer le tirant, ce à quoi il s'oppose. Le pivotement est ainsi empêché.

Selon une première variante, le système de contreventement comporte deux tirants sensiblement coplanaires et croisés, chaque tirant étant ancré près d'un des logements inférieurs. Cette disposition, qui forme une croix de Saint-André, permet de reprendre les efforts en des points très éloignés de l'arbre de fourche, et donc d'avoir un blocage très efficace de la tendance à pivoter du support supérieur sur l'arbre. Avec deux tirants croisés, les efforts sont repris dans les deux directions de pivotement. Par ailleurs, cette implantation est très facilement accessible par l'avant du véhicule.

Selon une disposition particulière, le système comporte des brides rapportées contre les platines, les brides comportant des tenons pour ancrer les tirants. On peut ainsi prévoir d'équiper la fourche à suspension d'un système de bridage selon l'invention sans changer le té de fourche ni la platine supérieure.

Les brides ont par exemple une forme annulaire et sont destinées à s'emmancher sur les amortisseurs. La forme annulaire permet de guider la bride sur l'amortisseur. La traction du tirant plaque la bride contre la platine et il reste simplement à prévoir un dispositif antirotation de la bride pour assurer son blocage complet. Ce dispositif peut être une butée destinée à prendre appui contre une face de la platine. Ce peut être aussi la réunion de deux brides à la manière d'une paire de lunettes.

De manière particulière, la platine supérieure et la platine inférieure comportent des tenons faisant saillie à l'avant pour ancrer les tirants. Avec les tenons, on prévoit les moyens d'ancrage des tirants comme par exemple des perçages traversant les tenons ou des sièges de crochet.

Selon une deuxième variante, le système de contreventement comporte deux tirants de part et d'autre d'un plan longitudinal passant par l'axe de l'arbre de fourche et perpendiculaire au plan défini par les axes des logements, les tirants ayant sensiblement la même direction. En étant placés de part et d'autre de l'arbre, les tirants ont des sens d'action opposés et se complètent pour agir contre les deux sens de la tendance au pivotement du support supérieur.

Selon un autre mode de réalisation, le système de contreventement comporte au moins une plaque fixée à la fois sur la platine supérieure et sur le té de fourche dans un plan éloigné de l'axe du té de fourche. La plaque joue le même rôle que les deux tirants. Elle peut être placée du côté avant de la fourche ou sur un côté latéral. On peut envisager de fixer deux plaques pour une meilleure répartition des efforts.

Selon un autre mode de réalisation, le système de contreventement comporte au moins une entretoise fixée par ses extrémités à la fois sur la platine supérieure et sur la platine inférieure. Une fois que les platines sont plaquées par des moyens d'assemblage contre l'entretoise, les trois pièces forment un ensemble rigide peu déformable et apte à maintenir les amortisseurs parallèles entre eux.

Selon un perfectionnement, la platine supérieure comporte une bague de réglage destinée régler une tension sur des moyens de guidage de l'arbre de fourche. Cette bague de réglage permet de compenser le fait que la distance entre les platines est imposée par l'entretoise.

Selon une deuxième disposition, les logements inférieurs et les logements supérieurs comportent des systèmes d'anti-rotation par obstacle. Ainsi la tendance au pivotement de la platine supérieure par rapport à la platine inférieure est contrée par les amortisseurs qui relient les deux pièces de manière fixe grâce aux systèmes d'anti-rotation.

De manière particulière, le système anti-rotation est un emmanchement polygonal ou un emmanchement à cannelures.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
- la figure 1 est une vue d'ensemble d'un véhicule selon l'art antérieur ;
- la figure 2 est vue de face d'un détail d'une fourche du véhicule de la figure 1 ;
- la figure 3 est une vue de dessus de la fourche du véhicule de la figure 1, illustrant le défaut de vrillage susceptible d'intervenir ;
- la figure 4 est une vue d'une fourche selon une première variante d'un premier mode de réalisation de l'invention ;
- la figure 5 est une vue du détail V de la figure 4 ;
- la figure 6 est une vue en perspective de la fourche de la figure 4 ;
- la figure 7 est une vue similaire à la figure 6 d'une deuxième variante du premier mode de réalisation ;
- la figure 8 est en perspective du haut d'une fourche selon un deuxième mode de réalisation de l'invention ;
- la figure 9 est une vue de face du haut d'une fourche selon un troisième mode de réalisation de l'invention ;
- la figure 10 est une vue similaire à la figure 9 d'un quatrième mode de réalisation de l'invention ;
- la figure 11 est une vue en coupe selon la ligne XI-XI de la figure 10 ;
- la figure 12 est une vue similaire à la figure 9 d'un cinquième mode de réalisation de l'invention ;
- la figure 13 est une vue en coupe selon la ligne XIII-XIII de la figure 12 ;
- la figure 14 est une vue similaire à la figure 9 d'un sixième mode de réalisation de l'invention ;
- la figure 15 est une vue en perspective du système de bridage de la figure 14 ;
- la figure 16 est une vue similaire à la figure 8 d'un septième mode de réalisation de l'invention ;
- la figure 17 est une vue en perspective du système de bridage de la figure 16 ;
- la figure 18 est une vue similaire à la figure 9 d'un huitième mode de réalisation de l'invention ;
- la figure 19 est une vue de dessus du système de bridage de la figure 18 ;
- la figure 20 est une vue en perspective d'une fourche de vélo selon l'art antérieur ;
- la figure 21 est une vue de face d'une fourche de vélo équipée d'un système de bridage selon un neuvième mode de réalisation de l'invention ;
- la figure 22 est une vue en perspective de la fourche de la figure 21 ;
- la figure 23 est une vue en perspective du seul système de bridage de la figure 21 ;
- la figure 24 est une vue de face d'une fourche de vélo équipée d'un système de bridage selon un dixième mode de réalisation de l'invention ;
- la figure 25 est une vue en perspective du seul système de bridage de la figure 24.

### DESCRIPTION DETAILLÉE

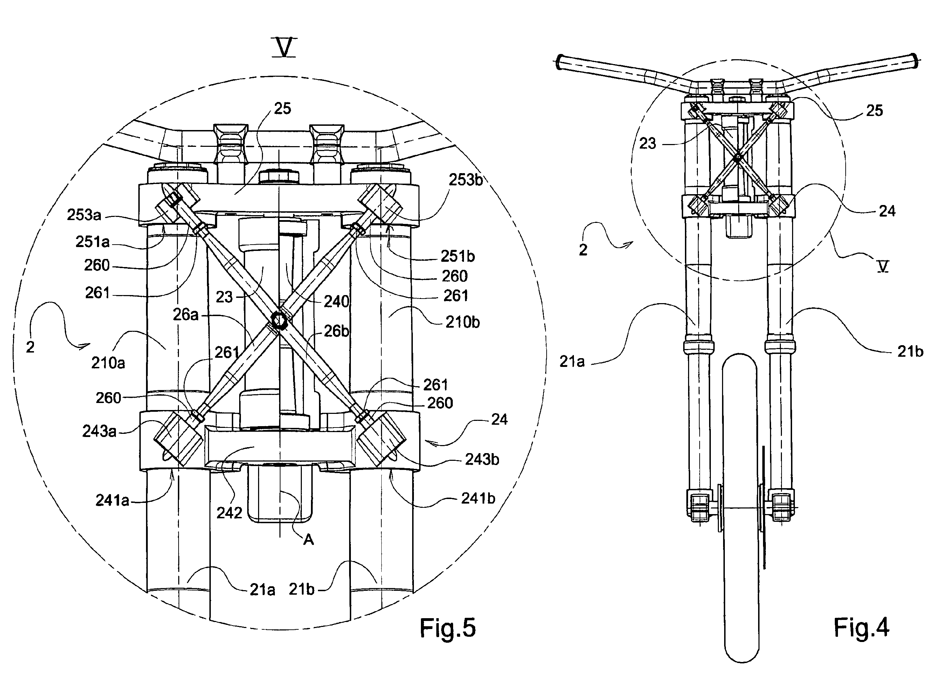

Dans une première variante d'un premier mode de réalisation de l'invention, représenté sur les figures 4 à 6, un système de bridage pour monter une fourche 2 à suspension comporte, comme dans l'art antérieur exposé aux figures 1 à 3, un té de fourche 24 et une platine supérieure 25. Le té de fourche 24 comporte une platine inférieure 242 et un arbre de fourche 240 monté pivotant sur le cadre 23 du véhicule. Les logements inférieurs 241a, 241b et les logements supérieurs 251a, 251b sont conçus de la même manière que dans l'art antérieur, avec des moyens pour serrer le fourreau 210a, 210b d'un amortisseur 21a, 21b. Le système de bridage comporte en outre des moyens d'assemblage classique pour assembler la platine supérieure 25 sur l'arbre de fourche 240.

Il est prévu en outre des moyens raidisseurs sous la forme de deux tirants 26a, 26b. Chaque tirant 26a, 26b relie la platine inférieure 242 à la platine supérieure 25. Le premier tirant 26a relie un tenon 243a près du logement droit inférieur 241a à un tenon 253b près du logement gauche 251b de platine supérieure 25, tandis que le deuxième tirant 26b relie un tenon 243b près du logement gauche inférieur 241b à un tenon 253a près du logement droit 251a de platine supérieure 25. Les tenons 243a, 243b, 253a, 253b font saillie vers l'avant du véhicule. Les tirants 26a, 26b se croisent en leur milieu avec un assemblage dit de croisement à mi-bois. Chaque tenon 243a, 243b, 253a, 253b est traversé par un perçage dans lequel se loge un écrou de tirant 260 qui reçoit une extrémité du tirant correspondant. Des contre-écrous 261 sont prévus pour bloquer les écrous de tirant 260 par rapport aux tirants.

Lors du montage du système de bridage, on procède de la même manière que pour le système selon l'art antérieur, en particulier pour monter les amortisseurs 21a, 21b sur le té de fourche 24, le té de fourche 24 sur le cadre 23 et la platine supérieure 25 sur l'arbre de fourche 240. Puis on insère les écrous de tirant 260 dans les perçages en plaçant le tirant 26a, 26b en regard des écrous de tirant 260. On visse les écrous de tirant 260 jusqu'à tendre les tirants 26a, 26b, en veillant à exercer une traction symétrique. On fixe ensuite une vis au travers du croisement des tirants pour limiter les vibrations relatives des tirants 26a, 26b. Un tel système s'adapte facilement à la place du té de fourche et de la platine supérieure d'origine et peut donc être proposé en pièce de remplacement pour un véhicule existant. La position éloignée de la croix par rapport à l'axe A de l'arbre de fourche 240 apporte une grande efficacité aux tirants 26a, 26b pour contrer le pivotement de la platine supérieure 25 dans l'arbre de fourche 240.

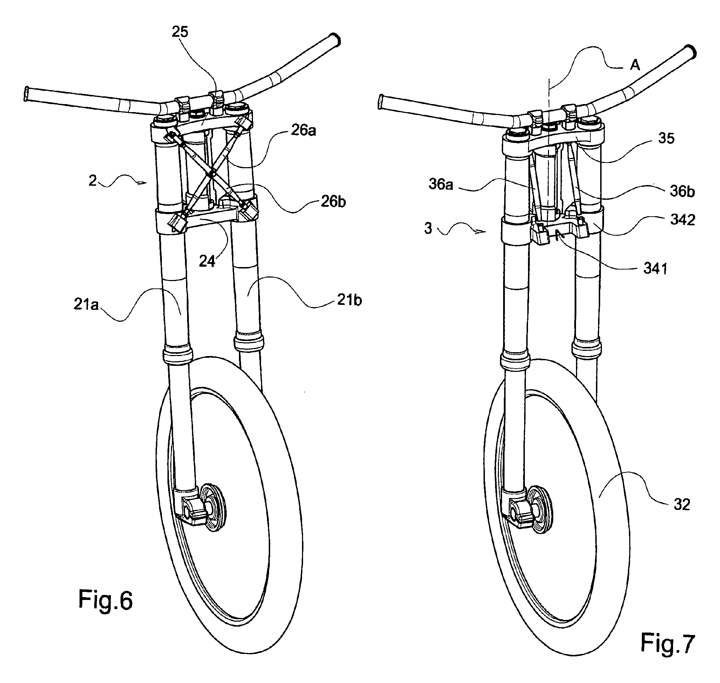

Dans une deuxième variante du premier mode de réalisation, représentée sur la figure 7, chaque tirant 36a, 36b est placé dans un plan parallèle au plan de la roue 32, de part et d'autre de l'axe A de l'arbre de fourche. Les tirants 36a, 36b sont parallèles entre eux et s'étendent depuis un côté avant 341 de la platine inférieure 342 vers un côté arrière de la platine supérieure 35. Ainsi, le plan défini par les axes des tirants est incliné par rapport à l'axe A de l'arbre de fourche. Les tirants 36a, 36b sont fixés et mis en tension part des écrous de tirant de la même manière que dans le premier mode de réalisation, les écrous de tirant traversant des perçages obliques respectivement de la platine inférieure 342 et de la platine supérieure 35. Le procédé de montage est similaire à celui de la première variante. Le système de bridage selon cette variante a les mêmes effets et les mêmes avantages que la première variante. De plus, il permet de laisser libre la partie avant entre le té de fourche et la platine supérieure, par exemple pour la fixation d'un accessoire tel qu'un phare.

Dans une variante non représentée, les tirants sont de part et d'autre des logements inférieurs et supérieurs.

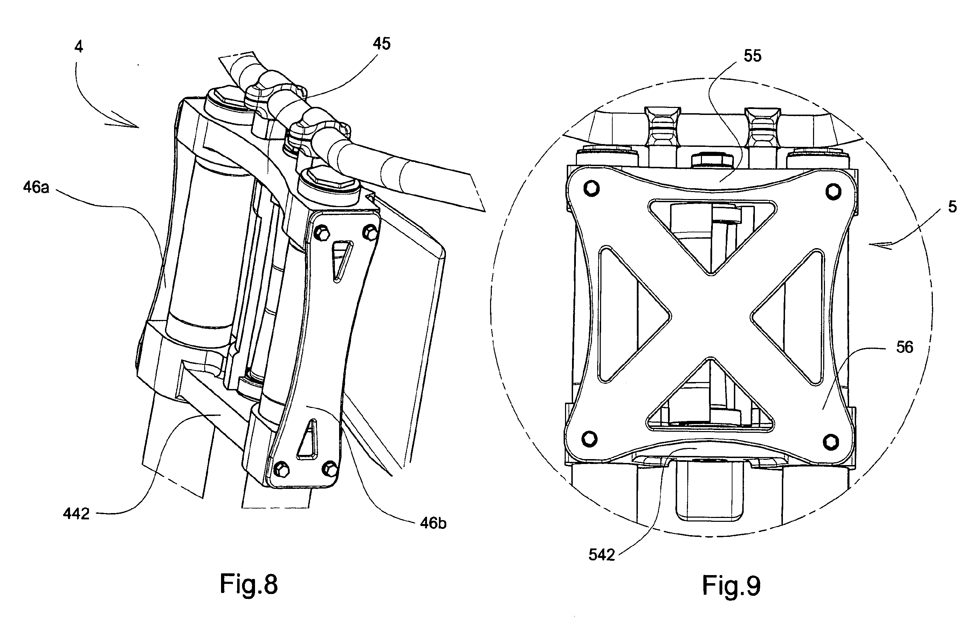

Selon un deuxième mode de réalisation du système de bridage 4 de l'invention, représenté sur la figure 8, des moyens de contreventement sont réalisés par deux plaques 46a, 46b rapportées sur les côtés du système de bridage et fixées par des vis. Chaque plaque 46a, 46b relie la platine inférieure 442 à la platine supérieure 45. Les plaques s'opposent au désalignement respectif d'un logement inférieur avec le logement supérieur correspondant par un effet de contreventement. En combinaison avec la rigidité en torsion des platines, on forme ainsi un cadre rigide qui permet d'éviter le vrillage de la fourche.

Dans un troisième mode de réalisation de l'invention, le système de bridage 5, représenté sur la figure 9, comporte une plaque 56 rapportée sur les faces avant des platines inférieure 542 et supérieure 55. La plaque 56 agit sensiblement de la même manière que les tirants du premier mode de réalisation.

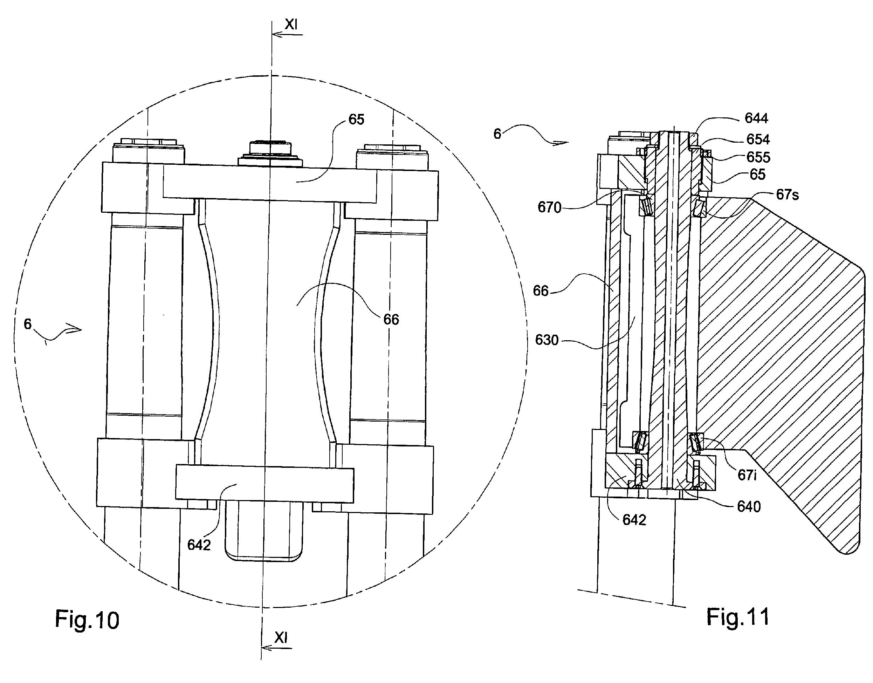

En référant aux figures 10 et 11, représentant un quatrième mode de réalisation de l'invention, les deux platines 642, 65 sont reliées par une entretoise 66 monobloc. Le système de bridage 6 a alors une forme de I. Les platines 642, 65 sont assemblées avec l'entretoise 66 par des vis vissées dans les extrémités de l'entretoise 66. La conception du guidage en pivotement de la fourche sur le cadre est modifiée par rapport à l'art antérieur. L'arbre de fourche 640 est monté de manière démontable sur la platine inférieure 642. Cette modification n'est pas indispensable pour ce mode de réalisation. Deux moyens de guidage 67i, 67s prennent appui à l'intérieur d'un tube de colonne de direction 630 et guident l'arbre de fourche 640. Une bague filetée 654 traverse la platine supérieure 65 et vient en appui sur une bague intérieure 670 du moyen de guidage supérieur 67s. Le réglage de la bague filetée 654 permet d'ajuster la position et la précontrainte des moyens de guidage 67i, 67s. Un contre-écrou 655 vissé sur la bague filetée 654. vient en appui sur la platine supérieure 65 afin de bloquer la bague filetée 654. Par ailleurs, un écrou 644 est vissé à l'extrémité supérieure de l'arbre de fourche 640 et vient en appui sur la bague filetée 654. Cet écrou 644 sert à empêcher tout battement de l'extrémité de l'arbre de fourche contre la bague filetée 654. L'ensemble de l'entretoise 66 et des platines 642, 65 forme un ensemble rigide qui permet d'éviter le vrillage de la fourche en maintenant les logements inférieurs et supérieurs alignés.

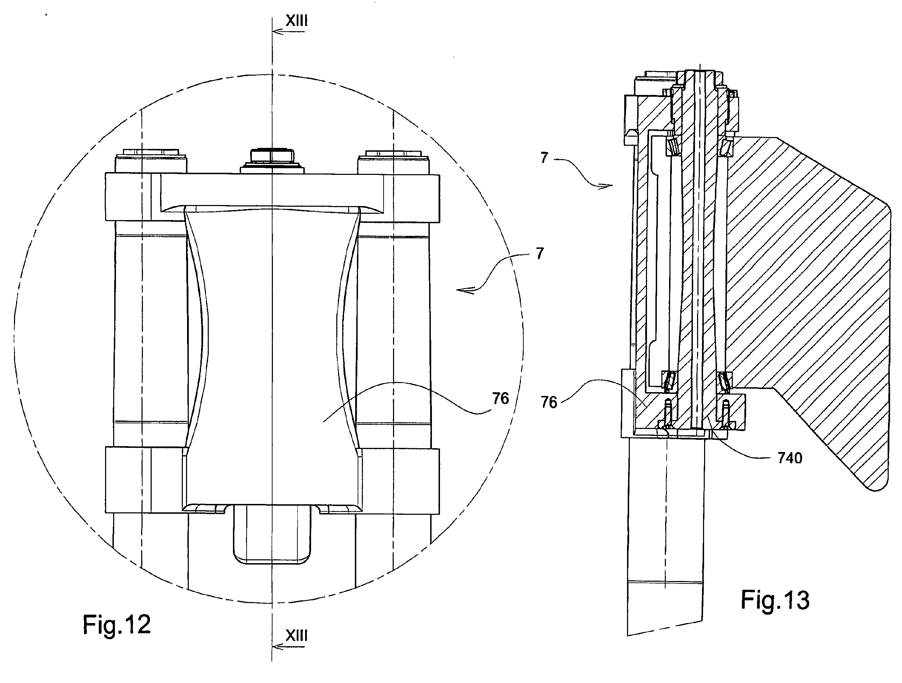

Dans un cinquième mode de réalisation du système de bridage 7, montré sur les figures 12 et 13, les platines et l'entretoise similaires au quatrième mode de réalisation sont réalisée d'un seul tenant 76. Le montage de l'arbre de fourche 740 est similaire à celui du quatrième mode de réalisation. On obtient les mêmes effets que précédemment.

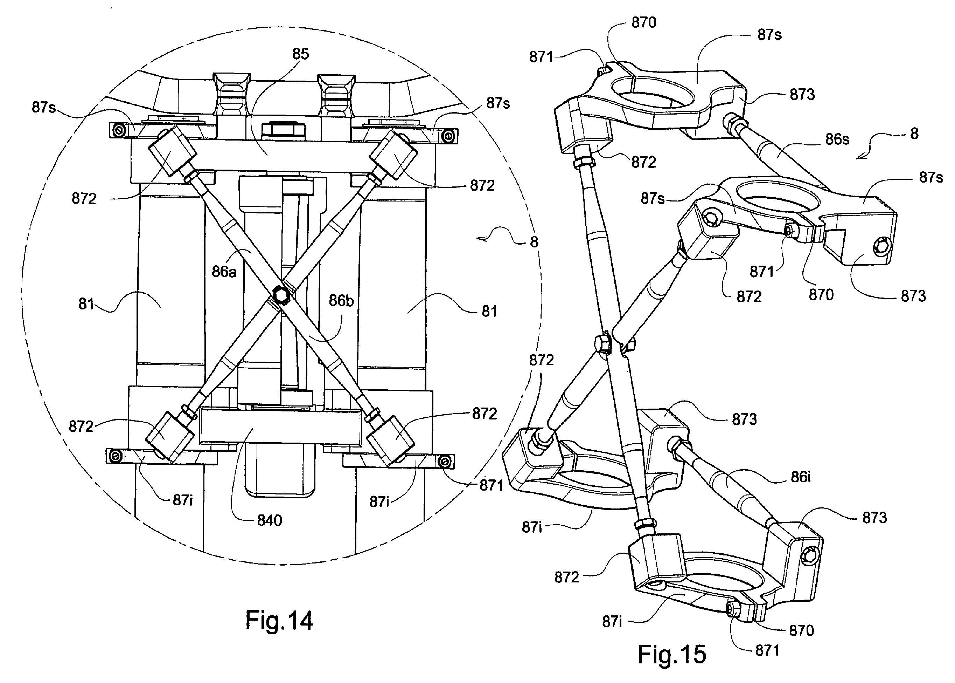

Les figures 14 et 15 montrent un sixième mode de réalisation de l'invention du système de bridage 8. Le système de bridage 8 vient en complément du système de bridage classique qui comporte une platine inférieure 840 et une platine supérieure 85. Le système complémentaire comporte quatre brides en forme d'anneau. Il comporte en particulier un anneau 87i, 87s auprès de chaque logement. Chaque anneau 87i, 87s est emmanché contre l'une des platines 840, 85 sur l'un des amortisseurs 81. Chaque anneau 87i, 87s comporte une fente 870 et une vis de serrage 871 associée traversant la fente afin de serrer l'anneau sur l'amortisseur 81. Deux des anneaux 87i, dits inférieurs, sont placés sous la platine inférieure 840. Deux autres anneaux 87s, dits supérieurs, sont placés sur la platine supérieure 85. Chaque anneau 87i, 87s comporte en outre un tenon 872 avant faisant saillie vers l'avant. Il est prévu des moyens raidisseurs sous la forme de deux tirants 86a, 86b croisés conçus et agissant de la même manière que les tirants 26a, 26b du premier mode de réalisation et traversant les tenons avant 872 des anneaux 87i, 87s. Les anneaux 87i, 87s comportent en outre des tenons arrière 873, à l'opposé des tenons avant 872. Les tenons arrière 873 des anneaux inférieurs 87i le long de la platine inférieure 840 sont reliés entre eux par un tirant inférieur 86i. De même, les tenons arrière 873 des anneaux supérieurs 87s sont reliés entre eux par un tirant supérieur 86s. Le système de bridage complémentaire apporte une grande rigidité, les tirants croisés 86a, 86b agissant de la même manière que dans le premier mode de réalisation, et les tirants inférieur et supérieur 86i, 86s assurant le blocage des anneaux 87i, 87s autour des amortisseurs 81. De plus la traction des tirants croisés 86a, 86b maintient les anneaux 87i, 87s plaqués contre les platines 840, 85.

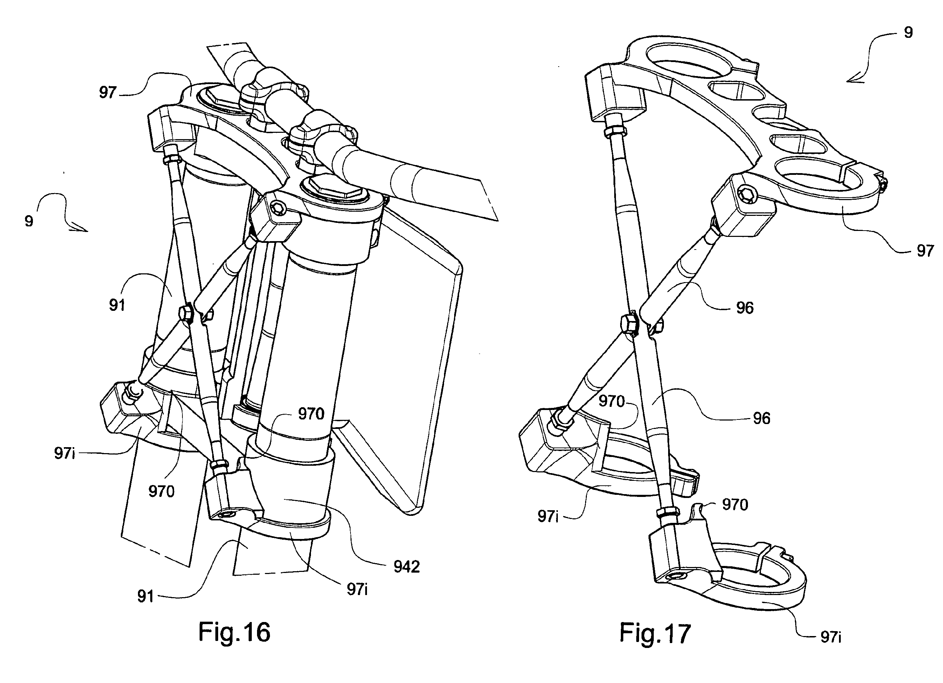

Dans un septième mode de réalisation de l'invention, montré sur les figures 16 et 17, le système de bridage 9 comporte des tirants croisés 96 se distingue de celui du sixième mode de réalisation par une bride supérieure 97 réunissant en une seule pièce les anneaux supérieurs. De ce fait, le tirant supérieur n'est plus nécessaire, de même que les tenons arrière des anneaux supérieurs. Le système de bridage 9 se distingue également par le fait que les anneaux inférieurs 97i comportent des butées 970 venant en appui contre la platine inférieure 942, de manière à s'opposer au pivotement de l'anneau 97i autour de l'amortisseur 91. Les butées 970 remplacent les tenons arrière des anneaux inférieurs 97i et le tirant inférieur.

Ces deux modifications peuvent être mises en oeuvre indépendamment l'une de l'autre.

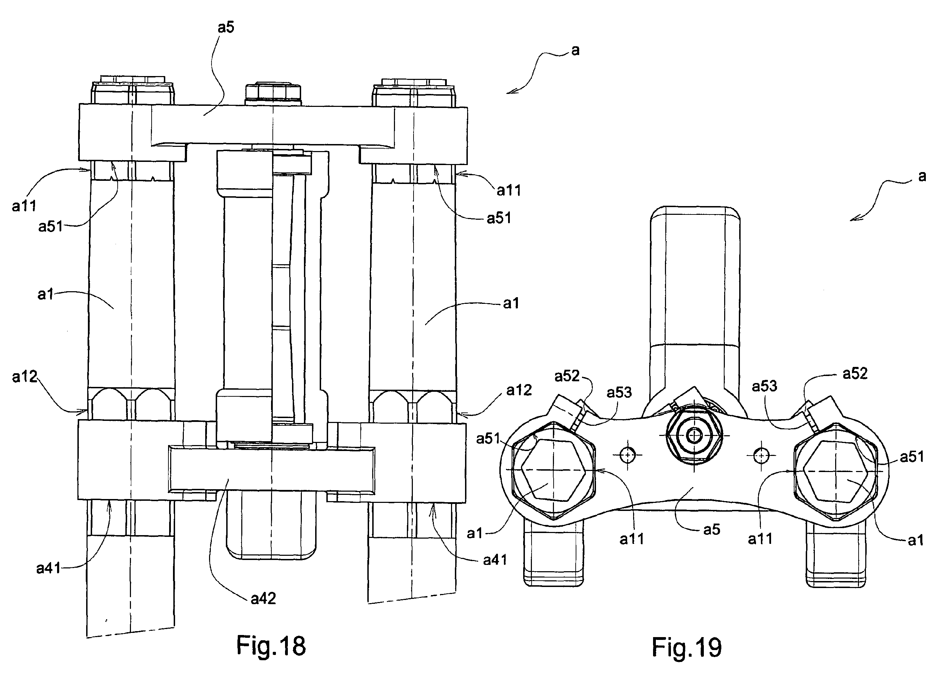

Dans un huitième mode de réalisation, montré sur les figures 18 et 19, le système de bridage « a » comporte des moyens anti-rotation entre les amortisseurs a1 d'une part, les platines supérieure a5 et inférieure a42 d'autre part. Les moyens anti-rotation sont réalisés par des emmanchements polygonaux, par exemple hexagonaux. Les amortisseurs a1 comportent spécifiquement deux portées a11, a12 de section hexagonale. Pour que le montage soit possible, la section du logement inférieur a41 est plus grande que celle du logement supérieur a51. Comme dans l'art antérieur, les logements a41, a51 comportent une fente a52 et une vis a53 permettant de réduire cette fente a52 afin d'obtenir le serrage de la platine inférieure a42 ou de la platine supérieure a5 sur les amortisseurs a1. Le procédé de montage est le même que dans l'art antérieur.

La liaison sans pivotement possible entre les amortisseurs, la platine supérieure a5 et la platine inférieure a42 garantit que la platine supérieure a5 ne pivote pas par rapport à la platine inférieure a42 et que les amortisseurs a1 restent parallèles. Le vrillage de la fourche est ainsi empêché.

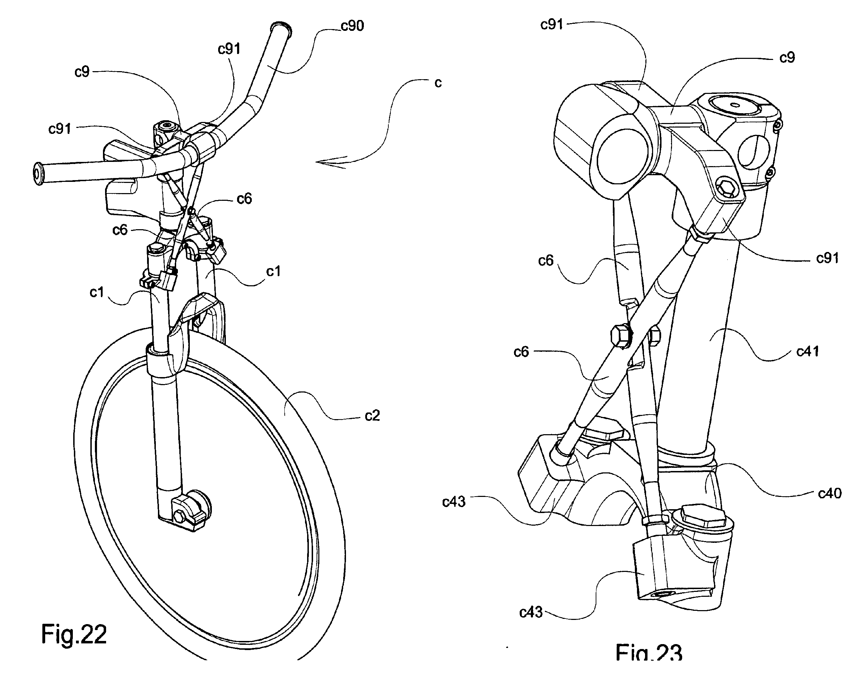

Un neuvième mode de réalisation de l'invention concerne un système de bridage « c » pour une fourche de vélo et est montré sur les figures 21 à 23. Le système de bridage comporte un té de fourche c4 sur lequel sont fixés deux amortisseurs c1. Le té de fourche c4 comporte un arceau c40 sur lequel est fixé de manière classique un arbre de fourche c41 dans un tube de colonne de direction c3. L'arbre de fourche reçoit au débouché du tube un support supérieur sou la forme d'une potence c9 sur laquelle est fixé un guidon c90.

Selon l'invention, l'arceau c40 comporte deux tenons c43 faisant saillie vers l'avant. Par ailleurs, la potence comporte deux bras c91 s'étendant sensiblement perpendiculairement au plan R de la roue. Deux tirants c6 croisés, similaires à ceux du premier mode de réalisation, relient chacun un bras c91 à un tenon c43.

Lorsqu'une torsion est exercée entre la roue et le guidon, la potence peut avoir tendance à pivoter sur l'arbre de fourche c41. Cependant, selon le sens de pivotement l'un des tirants c6 va exercer une traction entre son tenon c43 et son bras c91 de manière oblique et décalée par rapport à l'axe de l'arbre de fourche c41, ce qui évitera le pivotement de la potence c9.

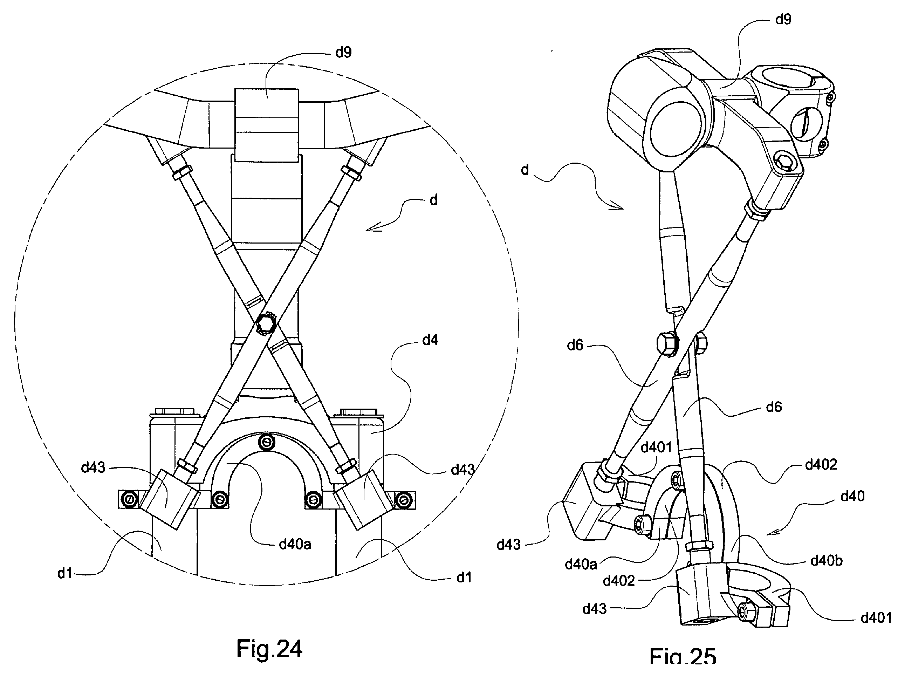

Dans un dixième mode de réalisation de l'invention, représenté sur les figures 24 et 25, en variante du neuvième mode de réalisation, le système de bridage « d » comporte la même potence d9 que précédemment. Cependant, une bride inférieure d40 est prévue et se fixe sur les amortisseurs d1 sous le té de fourche d4. La bride inférieure d40 est formée par deux demi-brides d40a, d40b assemblées par des vis. Chaque demi-bride d40a, d40b comporte deux demi-cerclages d401 entourant partiellement les amortisseurs d1 et reliés entre eux par une arche d402. Sur la demi-bride avant d40a sont prévus deux tenons d43 qui reçoivent les tirants d6. Ainsi le système de bridage peut être installé sur un vélo sans changer le té de fourche d4, simplement avec une nouvelle potence d9.

## Revendications

1. Système de bridage pour une fourche à suspension de véhicule à deux ou trois roues, le système comportant un té de fourche (24) et un support supérieur (25), le té de fourche (24) comportant une platine inférieure (242) et un arbre de fourche (240) destiné à être monté pivotant sur le cadre (23) du véhicule, la platine inférieure (242) comportant deux logements inférieurs (241a, 241b) pour recevoir deux amortisseurs (21a, 21b) parallèlement l'un à l'autre et à l'avant de l'arbre de fourche (240), le système de bridage (2) comportant des moyens d'assemblage pour assembler le support supérieur (25) sur l'arbre de fourche (240), le système étant **caractérisé en ce qu'**il comporte en outre des moyens raidisseurs (26a, 26b) amovibles extérieurs à l'arbre de fourche (240) pour maintenir l'orientation relative du té de fourche (24) et du support supérieur (25).

2. Système selon la revendication 1, dans lequel le support supérieur est une platine supérieure (25) comportant deux logements supérieurs (251a, 251b), chaque logement supérieur étant aligné avec l'un des logements inférieurs et recevant l'un des amortisseurs.

3. Système selon la revendication 1, dans lequel le support supérieur est une potence (c9) destinée à supporter un guidon (c90).

4. Système selon la revendication 1, dans lequel les moyens raidisseurs comportent des moyens de contreventement (26a, 36a, 46a, 56, 66) reliant le support supérieur (25) et la platine inférieure (242).

5. Système selon la revendication 4, dans lequel le système de contreventement comporte au moins un tirant (26a, 36a) reliant le support supérieur (25) et la platine inférieure (242) dans une direction oblique par rapport à l'axe (A) de l'arbre de fourche (240) et décalé par rapport audit axe (A).

6. Système selon la revendication 5, dans lequel le système de contreventement comporte deux tirants (26a, 26b) sensiblement coplanaires et croisés, chaque tirant (26a, 26b) étant ancré près d'un des logements inférieurs.

7. Système selon la revendication 6, **caractérisé en ce qu'**il comporte des brides (87s, 87i, 97) rapportées contre les platines, les brides comportant des tenons (872) pour ancrer les tirants (86a, 86b).

8. Système selon la revendication 7, dans lequel les brides (87s, 87i) ont une forme annulaire et sont destinées à s'emmancher sur les amortisseurs (81).

9. Système selon la revendication 6, dans lequel la platine supérieure (25) et la platine inférieure (242) comportent des tenons (243a, 243b, 253a, 253b) faisant saillie à l'avant pour ancrer les tirants (26a, 26b).

10. Système selon la revendication 5, **caractérisé en ce qu'**il comporte deux tirants (26a, 36b) de part et d'autre d'un plan longitudinal passant par l'axe (A) de l'arbre de fourche et perpendiculaire au plan défini par les axes des logements, les tirants (26a, 36b) ayant sensiblement la même direction.

11. Système selon la revendication 4, dans lequel le système de contreventement comporte au moins une plaque (46a, 46b) fixée à la fois sur la platine supérieure (45) et sur la platine inférieure (442) dans un plan éloigné de l'axe (A) du té de fourche.

12. Système selon la revendication 4, dans lequel le système de contreventement comporte au moins une entretoise (66) fixée par ses extrémités à la fois sur la platine supérieure (65) et sur la platine inférieure (642).

13. Système selon la revendication 12, dans lequel la platine supérieure (65) comporte une bague de réglage (654) destinée régler une tension sur des moyens de guidage (67i, 67s) de l'arbre de fourche (640).

14. Système selon la revendication 2, dans lequel les logements inférieurs (a41) et les logements supérieurs (a51) comportent des systèmes d'anti-rotation par obstacle.

15. Système selon la revendication 14, dans lequel le système anti-rotation est un emmanchement polygonal (a51, a11).

16. Système selon la revendication 14, dans lequel le système anti-rotation est un emmanchement à cannelures.

## Patentansprüche

1. Spannvorrichtung für die Aufhängegabel eines Fahrzeugs mit zwei oder drei Rädern, bestehend aus einer Gabelbrücke (24) und einer oberen Halterung (25), wobei die Gabelbrücke (24) eine untere Platte (242) und eine Gabelachse umfasst, die schwenkbar auf den Fahrzeugrahmen (23) montiert wird, und die untere Platte (242) mit zwei unteren Aussparungen (241a, 241b) für zwei Stoßdämpfer (21a, 21b) versehen ist, die vor der Gabelachse (240) parallel zueinander liegen. Die Spannvorrichtung (2) weist Verbindungsmittel auf, um die obere Halterung (25) auf der Gabelachse (240) zu montieren, wobei die Spannvorrichtung **dadurch gekennzeichnet ist, dass** sie außerdem außen an der Gabelachse (240) mit abnehmbaren Versteifungen (26a, 26b) versehen ist, welche die Orientierung der Gabelbrücke (24) zur oberen Halterung (25) aufrechterhalten.

2. Vorrichtung nach Anspruch 1, in welcher die obere Halterung eine obere Platte (25) ist, die zwei obere Aussparungen (251a, 251b) aufweist, von denen jede deckungsgleich mit einer unteren Aussparung liegt und einen Stoßdämpfer aufnimmt.

3. Vorrichtung nach Anspruch 1, in welcher die obere Halterung ein Lenkvorbau (c9) ist, der einen Lenker (c90) trägt.

4. Vorrichtung nach Anspruch 1, in welcher die Versteifungen aus Verstrebungen (26a, 36a, 46a, 56, 66) bestehen, durch welche die obere Halterung (25) und die untere Platte (242) miteinander verbunden werden.

5. Vorrichtung nach Anspruch 4, in welcher die Verstrebungen mindestens eine Zugstrebe (26a, 36a) umfassen, durch welche die obere Halterung (25) mit der unteren Platte (242) schräg zur Achse (A) der Gabelachse (240) und im Verhältnis zu besagter Achse (A) versetzt verbunden werden.

6. Vorrichtung nach Anspruch 5, in welcher die Verstrebungen zwei Zugstreben (26a, 26b) umfassen, die merklich komplanar und überkreuzt liegen, wobei jede Zugstrebe (26a, 26b) neben einer unteren Aussparung verankert ist.

7. Vorrichtung nach Anspruch 6, **dadurch gekennzeichnet, dass** sie Flansche (87s, 87i, 97) aufweist, die auf den Platten sitzen, wobei die Flansche über Zapfen (872) zur Verankerung der Zugstreben (86a, 86b) verfügen.

8. Vorrichtung nach Anspruch 7, in welcher die Flansche (87s, 87i) ringförmig sind und auf die Stoßdämpfer (81) gesteckt werden.

9. Vorrichtung nach Anspruch 6, in welcher die obere Platte (25) und die untere Platte (242) über hervorstehende Zapfen (243a, 243b, 253a, 253b) zur Verankerung der Zugstreben (26a, 26b) verfügen.

10. Vorrichtung nach Anspruch 5, **dadurch gekennzeichnet, dass** sie auf beiden Seiten einer Längsmittelebene, die durch die Achse (A) der Gabelachse verläuft und rechtwinklig zu der von den Achsen der Aussparungen definierten Ebene liegt, zwei Zugstreben (26a, 26b) umfasst, deren Orientierung merklich identisch ist.

11. Vorrichtung nach Anspruch 4, in welcher die Verstrebungen mindestens eine Platte (46a, 46b) umfassen, die sowohl an der oberen Platte (45) als auch an der unteren Platte (442) in einer Ebene befestigt sind, die von der Achse (A) der Gabelbrücke entfernt liegt.

12. Vorrichtung nach Anspruch 4, in welcher die Verstrebungen mindestens einen Steg (66) aufweisen, dessen Enden an der oberen Platte (65) und an der unteren Platte (642) befestigt sind.

13. Vorrichtung nach Anspruch 12, in welcher die obere Platte (65) einen Stellring (654) aufweist, über den eine Spannung an Lenkmitteln (67i, 67s) der Gabelachse (640) eingestellt wird.

14. Vorrichtung nach Anspruch 2, in welcher die unteren Aussparungen (a41) und die oberen Aussparungen (a51) über eine Vorrichtung zur Drehbegrenzung verfügen.

15. Vorrichtung nach Anspruch 14, in welcher die Vorrichtung zur Drehbegrenzung ein polygonaler Schaft (a51, a11) ist.

16. Vorrichtung nach Anspruch 14, in welcher die Vorrichtung zur Drehbegrenzung ein geriffelter Schaft ist.

## Claims

1. Clamping system for a two or three wheels vehicle fork with a suspension system, with the system featuring a lower triple clamp (24) and an upper support (25), the lower triple clamp (24) having a lower plate (242) and a fork shaft (240) to be mounted in a way that enables it to pivot on the vehicle frame (23), the lower plate (242) having two lower housings (241a, 241b) to receive two shock absorbers (21a, 21b) set parallel to one another and in front of the fork shaft (240), the clamping system (2) including fitting devices to assemble the upper support (25) on the fork shaft (240), the system being **characterized by** the fact that it also has removable stiffening devices (26a, 26b) set apart from the fork shaft (240) to maintain the relative orientations of the lower triple clamp (24) and the upper support (25).

2. System in accordance with claim 1, in which the upper support is an upper triple clamp (25) featuring two upper housings (251a, 251b), each upper housing being aligned with one of the lower housings and receiving one of the shock absorbers.

3. System in accordance with claim 1, in which the upper support is a stem (c9) used to support a handlebar (c90).

4. System in accordance with claim 1, in which the stiffening devices include struts (26a, 36a, 46a, 56, 66) linking the upper support (25) and the lower plate (242).

5. System in accordance with claim 4, in which the reinforcing system features at least one tie rod (26a, 36a) linking the upper support (25) to the lower plate (242) in an oblique direction as compared with the axis (A) of the fork shaft (240) and offset from the said axis (A).

6. System in accordance with claim 5, in which the reinforcing system has two tie rods (26a, 26b) in more or less the same plane and crossed over, each tie rod (26a, 26b) being anchored near one of the lower housings.

7. System in accordance with claim 6, **characterized by** the fact that it includes clamping means (87s, 87i, 97) placed against the plates, with the clamping means having lugs (872) to anchor the tie rods (86a, 86b).

8. System in accordance with claim 7, in which the clamping means (87s, 87i) have a ring shape and are designed to fit on the shock absorbers (81).

9. System in accordance with claim 6, in which the upper triple clamp (25) and the lower plate (242) have lugs (243a, 243b, 253a, 253b) standing out forwards to anchor the tie rods (26a, 26b).

10. System in accordance with claim 5, **characterized by** the fact that it includes two tie rods (26a, 36b) lying on each side of a longitudinal plane passing through the axis (A) of the fork shaft and perpendicular to the plane defined by the axes of the housings, with the tie rods (26a, 36b) placed more or less in the same direction.

11. System in accordance with claim 4, in which the reinforcing system includes at least one plate (46a, 46b) fixed on the upper triple clamp (45) and also on the lower plate (442) in a plane lying well away from the axis (A) of the lower triple clamp.

12. System in accordance with claim 4, in which the reinforcing system includes at least one distance piece (66) whose ends are fixed on the upper triple clamp (65) and the lower plate (642).

13. System in accordance with claim 12, in which the upper triple clamp (65) includes an adjusting ring (654) designed to set a tension level on the guidance systems (67i, 67s) of the fork shaft (640).

14. System in accordance with claim 2, in which the lower housings (a41) and the upper housings (a51) have anti-rotation systems using obstacles.

15. System in accordance with claim 14, in which the anti-rotation system consists of a polygonal assembly (a51, a11).

16. System in accordance with claim 14, in which the anti-rotation system consists of a splined assembly.
